(19) **Europäisches Patentamt**

**European Patent Office**

**Office européen des brevets**

(11) **EP 0 791 209 B1**

(12) **EUROPEAN PATENT SPECIFICATION**

(45) Date of publication and mention
of the grant of the patent:
**04.12.2002 Bulletin 2002/49**

(51) Int Cl.⁷: **G06T 15/10**, G06F 12/08

(86) International application number:
**PCT/IB96/00899**

(21) Application number: **96927824.1**

(22) Date of filing: **06.09.1996**

(87) International publication number:
**WO 97/010572 (20.03.1997 Gazette 1997/13)**

(54) **IMAGE TEXTURE MAPPING USING TEXEL CACHES**

BILDTEXTURABBILDUNG UNTER VERWENDUNG VON TEXEL-PUFFERSPEICHERN

MAPPAGE DE TEXTURE D'IMAGE A L'AIDE D'ANTEMEMOIRES DE TEXELS

(84) Designated Contracting States:
**DE FR GB IT**

(30) Priority: **13.09.1995 GB 9518696**

(43) Date of publication of application:
**27.08.1997 Bulletin 1997/35**

(73) Proprietor: **Koninklijke Philips Electronics N.V.
5621 BA Eindhoven (NL)**

(72) Inventor: **PENNA, David, Edward
Surrey RH1 2DE (GB)**

(74) Representative: **White, Andrew Gordon
Philips Electronics UK Limited,
Patents and Trade Marks Department,
Cross Oak Lane
Redhill, Surrey RH1 5HA (GB)**

(56) References cited:
**EP-A- 0 613 098      EP-A- 0 747 858
WO-A-95/24682**

**Description**

The present invention relates to an apparatus for image processing and particularly, but not exclusively, for rendering two dimensional images, where those images include one or more polygons defined in two dimensional space, and pixel texture values (texels) from a two dimensional image or texture map are mapped onto pixel positions within the projected two dimensional polygon.

The process of texture mapping is well known, in essence comprising the step of wrapping a two-dimensional picture or texture over a geometric surface in order to give a greater degree of realism and often a reduction in the geometric complexity of the object. Basic texture mapping techniques are described for example in "Computer Graphics: Principles and Practice" by Foley, van Dam, Feiner and Hughes, published by Addison Wesley 1990, ISBN 0-201-12110-7, at pages 741-744.

When a texture map is applied to a polygon, the position of the vertices of the polygon in the texture map are found and interpolated over the polygon as it is drawn. Typically the polygon is drawn one scan line at a time, with the pixels covered by the top scan line on which the polygon is present being rendered first, followed by those pixels on the display line below that and so on until the polygon is completely drawn. Typically also, the pixels are rendered in order from left to right on any scan line.

The simplest approach to deriving the colour to be applied to a pixel is the process of point sampling. In this case, interpolated texture coordinates for the pixel are used to index a single texture map entry (a single texel). If, as will usually be the case, these coordinates have a fractional part then the value will be truncated or rounded so as to obtain an integer pair of texture coordinates.

This approach gives aliasing effects because the transition from one texel to another is abrupt. This means that, as an object moves slowly the colours of pixels will change abruptly due to the crude selection for the point sample position relative to the next texel.

A better technique is to use bilinear interpolation whereby the values of the four texels surrounding an indexed texture map entry are used. The usual algorithm for bilinear interpolation is to interpolate colour (or other) texel values using interpolation in both horizontal and vertical directions. While this has the effect of increasing display quality, it also quadruples the required memory bandwidth since four texels have to be read for each pixel rendered instead of one.

An example of such a technique is given in European patent application EP-A-0 747 858 filed 9th May 1996, published 11th December 1996. In the system described, a texture mapping apparatus utilises a texture cache to reduce bandwidth: a host computer rendering an image composed of image primitives stores texture for mapping to primitives in the cache. On determining that a particular texture value is required, a check is first made as to whether that value is available from the cache before it is called up from remote storage. An alternative technique, using an image memory constituted in a double-buffer structure to avoid the need for a texture cache, is described in EP-A-0 613 098.

It is therefore an object of the present invention to enable the use of interpolation techniques whilst reducing the required texture memory bandwidth.

In accordance with the present invention there is provided an image processing apparatus arranged to render an image including one or more polygons defined in two dimensional screen space, the apparatus comprising: first storage means holding two or more pixel texture maps each containing a plurality of pixel texture values (texels) and each being filtered to a different resolution level; second storage means arranged to store the coordinates of the vertices of a polygon in two dimensional screen space; and image rendering means coupled to the first and second storage means and operable to map pixel texture values derived from texels from two texture maps of different resolution levels onto pixels within the polygon; and texel caches in which the image rendering means stores texels read from the first storage means, the image rendering means being arranged to call for required texel values from the caches and to read said texel values from the first storage means only where they do not appear in cache storage; and in which a separate cache is provided for each texture map resolution level in the first storage means. The image rendering means may be arranged to store in each cache a texture map resolution level for each texel held in the cache.

The image rendering means may suitably be arranged to derive a texture map address for each required texel such as to enable the storage in each cache of the texture map address for each texel in the cache. With such an arrangement, the image rendering means may determine whether a required texel is held in the cache by comparison of derived and stored texture map addresses.

The invention will now be described by way of example only, with reference to the accompanying drawings, in which:

Figure 1 is a block schematic diagram of an image processing system embodying the present invention;
Figure 2 shows a three-dimensional object mapped into two-dimensional screen space;
Figure 3 shows a polygon representing a portion of the mapped object image of Figure 2; and
Figures 4 and 5 schematically represent the interpolation of texture memory values.

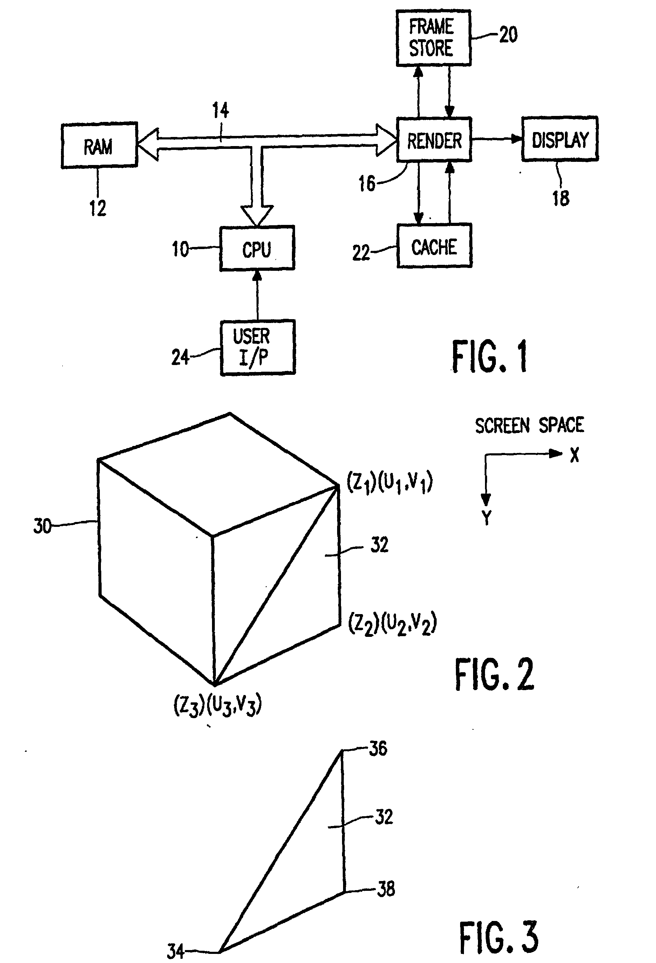

An image processing apparatus is shown in Figure 1, having a processing unit 10, arranged to process three dimensional image data to produce a viewable two dimensional view of a virtual three dimensional world. Three dimensional data and instructions controlling the operation of the processor 10, are held in a memory device (RAM 12) connected to the processor via data bus 14. Memory device 12 may be loaded from a permanent store which may include a magnetic disc, an optical disc, a magneto-optical disc or other suitable random-access storage medium. Based on data supplied via bus 14 from the processor 10, graphics rendering hardware generates video images which are then supplied to a video monitor 18, which could be in the form of a conventional television receiver. The rendering stage 16 is provided with local storage in the form of a conventional frame store 20, as well as a cache memory 22, the function of which will be described hereinafter. Interactive user inputs are received by the processor 10 from a controller 24, which could take the form of a keyboard, tracker-ball, mouse or dedicated key-pad, etc.

Three dimensional data is stored in the form of definitions of the position of polyhedra vertices in a three dimensional co-ordinate space. A two dimensional view of the three dimensional data is produced, on a frame-by-frame basis, by considering the vertices as being connected by straight tines, thereby defining a net of flat polygons. A view is rendered by considering each polygon in turn, possibly after performing back face culling, etc., so as to remove polygons which are not visible from the particular view under consideration. Thereafter, a list of polygons may be defined, which ensures that the polygons are rendered in the correct order. Figures 2 and 3 illustrate how a three dimensional object, in this case a cube 30, may be viewed as a net of flat polygons.

It is possible to allocate a solid colour to each of the polygons or, alternatively, to identify colours for the vertices and thereafter allocate colour values for each pixel within the polygon boundary by a process of linear interpolation. A similar process may also be performed to effect texture mapping or video mapping.

In Figure 3, a polygon 32 (in this case a triangle forming part of one face of cube 30) has been projected into a two dimensional viewing plane by processing three dimensional co-ordinates for vertices 34,36 and 38. Thus, these vertices were previously defined in a three dimensional space, having x, y and z co-ordinates and are projected onto a two dimensional (X,Y) plane.

The conveyance of information obtained from the z dimension to an observer may be achieved by ensuring that the polygons are rendered in the correct order, that is to say, polygons towards the rear (having greatest z extent) are rendered before polygons which have lower values of z, thereby ensuring that the polygons closest to an observer occlude polygons which are further away from the observer. Furthermore, information derived from the z dimension is also retained by ensuring perspectively correct projection of the polygons onto the two dimensional plane.

After projection, vertices 34, 36 and 38 are positioned at perspectively correct locations within the two dimensional display image-frame. Each vertex contains coordinate locations reflecting a mapping from the three dimensional world space to the two dimensional display image plane, in the form of a three dimensional co-ordinate set and a two dimensional co-ordinate set. In addition, each vertex may also contain other information, such as that defining aspects of the surface of the polygon, such as its colour, opacity or specularity, etc.

In the present embodiment, the processor is concerned with mapping a two dimensional image onto a three dimensional object, wherein said object is defined in the three dimensional world-space. The two dimensional image generated by the rendering hardware 16 (Fig.1) is a conventional video frame, to provide a mapping of a video texture onto the three dimensional object. Alternatively, a sequence of video frames may be considered, resulting in the mapping of a moving video sequence onto the three dimensional object. Thus, the video frame consists of an array of multi-coloured pixels, which may be defined as RGB values, luminance plus colour difference values or a compressed representation of such values. The position of each pixel within the image frame is identified by measuring along a scan-line from the top left corner, in order to give a U co-ordinate and measuring the number of scan lines down the frame, resulting in a V co-ordinate. Thus, it should be emphasised that the notation U and V is used herein to identify co-ordinate locations within the originating image and should not be confused with colour difference signals used in the PAL system.

Returning to the polygon 32, said polygon may be considered as an area of an output image and the purpose of the texture mapping procedure is to identify pixel values for said area. Thus, the image frame may be built up in a storage device and once completely full, that is to say, once pixel values have been calculated for all of the pixels within the frame, said frame may be raster scanned in order to produce a viewable video signal.

Vertices 34, 36 and 38 were originally defined in three dimensional space, each having a coordinate position (x,y,z). The projection into the two dimensional plane results in each vertex having a two dimensional coordinate within the viewing plane (X,Y). Thus, the vertices 34, 36 and 38 define an area of pixels within the output video frame, bounded by triangular polygon 32.

In theory, it would be possible to consider each pixel within triangle 32 in the three dimensional world space. Thus, an input two dimensional image could be mapped into the three dimensional world space, pixel values could be calculated within said space, whereafter said pixels could be projected into the two dimensional viewing plane. However, such a procedure would be computationally expensive and it would not allow the texture mapping facility to be implemented on many practical platforms.

For a triangular polygon 32 to be rendered, it is apparent that a triangular region of pixels within the input image frame will be mapped onto the pixels within polygon 32. Pixel values, defined by (U,V) co-ordinates, are identified for all of the pixel locations (X,Y) within the polygon region by a process of linear interpolation. As illustrated in Figure 2, mapping and rendering are effected with reference to triangular polygons, therefore a first stage would consist of splitting the flat surfaces of object 30 into triangular renderable polygons and projecting the polygons onto a two dimensional plane. Thereafter, maps are defined for the polygon vertices and additional positions are interpolated, such that individual pixels within the polygons are identified by a direct two dimensional mapping from the input image to the output image.

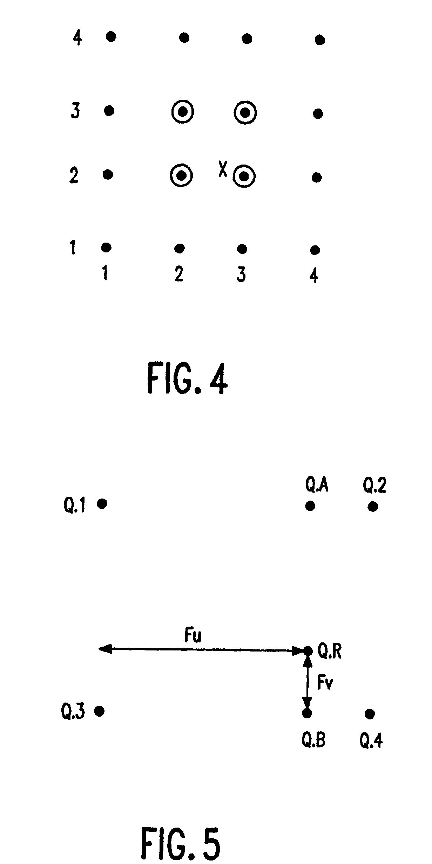

A conventional technique for the mapping of texture values onto polygon pixels by bilinear interpolation is illustrated in Figures 4 and 5. Figure 4 shows a part of a texture map in which is stored a number of pixel texture values (texels) as represented by solid dots. The interpolated texture coordinates for a pixel are used to index the texture map in order to determine the four surrounding texels: as shown, for pixel X having texture coordinates 2.8, 2.2, the four circled texels are found.

Figure 5 represents the qualities Q (for example a colour component value) held by the four texels identified in Figure 4. Interpolation in the horizontal direction between texel pairs Q.1, Q.2 and Q.3, Q.4 gives two values Q.A and Q.B for the fractional part Fu of the required texture position in the horizontal direction. Interpolation in the vertical direction between Q.A and Q.B for the fractional texture part Fv provides the desired quality (texture) value Q.R. The functions applied by the rendering stage 16 of Figure 1 to obtain Q.R may be as follows:

$$Q.A = Q.2.Fu + Q.1.(1 - Fu)$$

$$Q.B = Q.4.Fu + Q.3.(1 - Fu)$$

the results of which are then applied to:

$$Q.R = Q.A.Fv + Q.B.(1 - Fv)$$

In order to reduce the problems of texture memory bandwidth described above, use is made of the fact that, when texturing adjacent pixels on a given polygon row, it is common for at least two of the texels to be texels which were required while texturing the previous pixel.

In order to take advantage of this, a four texel cache (cache memory 22; Fig. 1) is provided which retains the texel values used after each texture interpolation process and makes them available for use while texturing the next pixel is required. An example of the way in which this might be arranged is with each of the four elements in the cache having storage for the texture co-ordinate for that texel as well as the colour value. When the required texture coordinates for the following pixel are known they can be compared with each of the cached coordinates. If there is a match with any of the four stored cache locations then the colour value stored there may be used instead of being read from memory. This will often result in a reduction in required memory bandwidth of around a factor of two.

An extension of this technique exploits the fact that, while texturing the next scan line of the polygon, half the required texel values will often have been used while the polygon pixels on the previous scan line were processed. This will require a much larger cache since the polygon may be many pixels wide, although it would of course be possible to provide a texel cache which is smaller than the maximum possible width of a polygon since this would handle smaller polygons completely and accelerate the processing of larger ones to some extent.

A further known technique for the improvement in texture mapping quality is that of trilinear interpolation. This may be implemented in a system which uses the MIP map technique to select one of several versions of a texture map, each filtered to be of a different size (different level of resolution). Where trilinear interpolation is used, the bilinear process described above is performed separately in each of two adjacent levels of the MIP map and the final drawn colour obtained by interpolating between the values obtained for each level. The advantage of this additional interpolation is the removal of the popping effect that can otherwise be seen as there is an abrupt change from one map to another.

While conventional trilinear interpolation techniques increase the image quality, they lead to a memory bandwidth requirement eight times that of a point sampled system, unless texture pixel caching as described here is used. In order to use the present invention effectively in a trilinearly interpolating system, a separate cache or set of caches may be provided for each of the two levels, or a single cache with level tagging for each entry.

In some systems the MIP map level may change at points as the polygon is rendered because of perspective effects. In order to allow for this effect it may be necessary to include a MIP map level field in each texel cache entry to prevent a false match with a texel from the wrong level.

From reading the present disclosure, other modifications will be apparent to persons skilled in the art. Such modifications may involve other features which are already known in the design, manufacture and use of image processing apparatus and devices and component parts thereof and which may be used instead of or in addition to features already described herein. Although claims have been formulated in this application to particular combinations of features, it should be understood that the scope of the disclosure of the present application also includes any novel feature or novel combination of features disclosed herein either explicitly or implicitly or any generalisation thereof, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

## Claims

1. Image processing apparatus arranged to render an image including one or more polygons defined in two dimensional screen space, the apparatus comprising:

   first storage means (12) holding two or more pixel texture maps each containing a plurality of pixel texture values (texels) and each being filtered to a different resolution level;
   second storage means (12) arranged to store the coordinates of the vertices of a polygon in two dimensional screen space; and
   image rendering means (16) coupled to the first and second storage means (12) and operable to map pixel texture values derived from texels from two texture maps of different resolution levels onto pixels within the polygon; and
   texel caches (22) in which the image rendering means (16) stores texels read from the first storage means, the image rendering means (16) being arranged to call for required texel values from the caches (22) and to read said texel values from the first storage means (12) only where they do not appear in cache storage;
   and in which a separate cache (22) is provided for each texture map resolution level in the first storage means.

2. Apparatus as claimed in Claim 1, wherein the image rendering means (16) is arranged to derive a texture map address for each required texel and to store in each cache (22) the texture map address for each texel in the cache.

3. Apparatus as claimed in Claim 2, wherein the image rendering means (16) is arranged to determine whether a required texel is held in the cache (22) by comparison of derived and stored texture map addresses.

4. Apparatus as claimed in Claim 1, wherein the image rendering means (16) is arranged to store in each cache (22) a texture map resolution level for each texel held in the cache.

## Patentansprüche

1. Bildverarbeitungsanordnung, vorgesehen zum Aufbereiten eines Bildes mit einem oder mehreren Polygonen, definiert in einem zweidimensionalen Schirmraum, wobei diese Anordnung die nachfolgenden Elemente umfasst:

   - erste Speichermittel (12), die eine oder mehrere Pixeltexturabbildungen aufweisen, die je eine Anzahl Pixeltexturwerte (Texel) enthalten und die je zu einem anderen Auflösungspegel gefiltert werden;
   - zweite Speichermittel (12), vorgesehen zum Speichern der Koordinaten der Scheitelpunkte eines Polygons in einem zweidimensionalen Schirmraum; und
   - Bildaufbereitungsmittel (16), die mit den ersten und den zweiten Speichermitteln (12) gekoppelt sind und Pixeltexturwerte abbilden, die von Texeln von zwei Texturabbildungen mit verschiedenen Auflösungspegeln hergeleitet sind, und zwar auf Pixeln innerhalb des Polygons; und
   - Texel-Cache-Speicher (22), in denen die Bildaufbereitungsmittel (16) Texel speichern, die aus den ersten Speichermitteln ausgelesen wurden, wobei die Bildaufbereitungsmittel (16) dazu vorgesehen sind, die erforderlichen Texelwerte aus den Cach-Speichern (22) abzurufen und die genannten Texelwerte aus den ersten Speichermitteln (12) nur dort auszulesen, wo sie nicht in dem Cache-Speicher erscheinen; und wobei für jeden Texturabbildungsauflösungspegel in den ersten Speichermitteln ein einzelner Cache-Speicher (22) vorgesehen ist.

2. Anordnung nach Anspruch 1, wobei die Bildaufbereitungsmittel (16) dazu vorgesehen sind, eine Texturabbildungsadresse für jedes erforderliche Texel herzuleiten und in jedem Cache-Speicher (22) die Texturabbildungsadresse für jedes Texel in dem Cache-Speicher zu speichern.

3. Anordnung nach Anspruch 2, wobei die Bildaufbereitungsmittel (16) dazu vorgesehen sind, zu bestimmen, ob ein erforderliches Texel durch einen Vergleich der hergeleiteten und der gespeicherten Texturabbildungsadresse in dem Cache-Speicher (22) festgehalten wird.

4. Anordnung nach Anspruch 1, wobei die Bildaufbereitungsmittel (16) dazu vorgesehen sind, in jedem Cache-Speicher (22) einen Texturabbildungsauflösungspegel für jedes in dem Cache-Speicher festgehaltene Texel zu speichern.

## Revendications

1. Appareil de traitement d'image prévu pour le rendu d'une image comprenant un ou plusieurs polygones définis dans un espace d'écran bidimensionnel, l'appareil comportant

   - un premier moyen de stockage (12)contenant deux ou plus de deux mappes de texture de pixels contenant chacun une pluralité de valeurs de texture de pixels (texels) et étant chacune filtrée à un niveau de résolution différent;
   - un deuxième moyen de stockage (12) agencé pour stocker les coordonnées des sommets d'un polygone dans un espace d'écran bidimensionnel;
   - un moyen de rendu d'une image (16) connecté aux premier et deuxième moyens de stockage (12) et pouvant fonctionner pour mapper les valeurs de texture de pixels dérivées des texels de deux mappes de texture de niveaux de résolution différents sur des pixels au sein du polygone, et
   - des antémémoires de texels (22) dans lesquelles le moyen de rendu d'image (16) stocke les texels lus du premier moyen de stockage, le moyen de rendu d'image (16) étant agencé pour appeler les valeurs de texels requises des antémémoires (22) et pour ne lire les valeurs de texels du premier moyen de stockage (12) que quand elles n'apparaissent pas dans le stockage d'antémémoire,

   et dans lequel une antémémoire séparée (22) est prévue pour chaque niveau de résolution de mappe de texture dans le premier moyen de stockage.

2. Appareil suivant la revendication 1, dans lequel le moyen de rendu d'image (16) est agencé pour dériver une adresse de mappe de texture pour chaque texel requis et pour stocker dans chaque antémémoire (22) l'adresse de mappe de texture pour chaque texel dans l'antémémoire.

3. Appareil suivant la revendication 2, dans lequel le moyen de rendu d'image (16) est agencé pour déterminer si un texel requis est contenu dans l'antémémoire (22) par comparaison des adresses de mappes de texture dérivée et stockée.

4. Appareil suivant la revendication 1, dans lequel le moyen de rendu d'image (16) est agencé pour stocker dans chaque antémémoire (22) un niveau de résolution de mappe de texture pour chaque texel contenu dans l'antémémoire.

FRAME STORE —20

RAM 14

RENDER

DISPLAY

12

16

18

10— CPU

22— CACHE

24— USER I/P

FIG. 1

30

$(Z_1)(U_1,V_1)$

32

$(Z_2)(U_2,V_2)$

$(Z_3)(U_3,V_3)$

SCREEN SPACE

X

Y

FIG. 2

36

32

38

34

FIG. 3

7

FIG. 4

FIG. 5